Europäisches Patentamt

European Patent Office

Office européen des brevets

(19)

(11) Publication number: **0 113 551**
**B1**

(12) **EUROPEAN PATENT SPECIFICATION**

(45) Date of publication of patent specification: **27.04.88**

(51) Int. Cl.⁴: **B 60 J 7/04**

(21) Application number: **83307465.1**

(22) Date of filing: **08.12.83**

(54) Vehicle sliding roof.

(30) Priority: **23.12.82 GB 8236684**

(43) Date of publication of application:
**18.07.84 Bulletin 84/29**

(45) Publication of the grant of the patent:
**27.04.88 Bulletin 88/17**

(84) Designated Contracting States:
**DE FR GB**

(56) References cited:
**DE-A-3 138 114**
**DE-A-3 311 441**
**FR-A-2 467 723**
**GB-A-2 078 295**

(73) Proprietor: **Britax Weathershields Limited**
**180 Sherlock Street**
**Birmingham B5 7EH (GB)**

(72) Inventor: **Cunningham, Douglas James**
**Sambourne 4 Church Close Dunton Bassett**
**Lutterworth Leicestershire LE16 5JY (GB)**
Inventor: **Turner, Paul William**
**36 West Avenue**
**Castle Bromwich Birmingham B36 ODY (GB)**

(74) Representative: **Hollinghurst, Antony**
**Britax Limited Patent Department Kingsham**
**Road**
**Chichester West Sussex PO19 2UG (GB)**

Courier Press, Leamington Spa, England.

## Description

This invention relates to a sliding roof for a vehicle of the type comprising a panel which, in its forward position, closes an opening in the fixed vehicle roof, the panel being pivotally mounted at each side adjacent to its front edge on respective front support means which are movable along respective guide tracks extending longitudinally of the vehicle on each side of the openings, respective rear support means being coupled to a panel behind each front support means and respective actuating means being arranged to co-operate with each rear support means to raise the rear edge of the panel and then to move the panel rearwardly so as to partially overlie the fixed roof behind the opening.

A sliding roof of this type is disclosed in Patent Specification GB—A—2078295. However the mechanism disclosed therein has a number of disadvantages. One of these is that, as the rear edge of the panel is raised from its fully closed position, the front edge thereof immediately starts to move away from the front edge of the opening with the result that it is not possible to have the rear edge of the panel fully raised while maintaining an adequate seal between the front edge of the panel and the corresponding edge of the opening to ensure that no draughts originate from that location. Another disadvantage is that the mechanism described involves a complex arrangement of pins, levers and springs, the panel not being positively held in its intermediate positions between the fully opened position and the fully closed position.

According to the present invention, a sliding roof for a vehicle comprises a panel which, in its forward position, closes an opening in the fixed vehicle roof, the panel being pivotally mounted at each side adjacent to its front edge on respective front support means which are movable along respective guide tracks extending longitudinally of the vehicle on each side of the opening, respective rear support means being coupled to the panel behind each front support means and respective actuating means being arranged to co-operate with each rear support means to raise the rear edge of the panel and then to move the panel rearwardly so as to partially overlie the fixed roof behind the opening, wherein each rear support means comprises a cam follower connected to the panel and each actuating means comprises a member which is movable along the corresponding guide track and has a fixed cam surface arranged to co-operate with a stationary cam surface on the track to move the cam follower substantially vertically so as to raise the rear edge of the panel and then to move the cam follower substantially horizontally so as to move the panel rearwardly.

In one form of the invention, the cam surface on the actuating member slopes forwardly and upwardly while the fixed cam surface has a substantially vertical section and a substantially horizontal section. As the actuating member is moved rearwardly, the cam follower is lifted upwards by the scissors action between the two cam surfaces until it reaches the horizontal section of the stationary cam surface. The cam surface in the actuating member may conveniently take the form of a slot in which the cam follower is a sliding fit. This prevents any risk of the cam follower moving out of engagement with the cam surface.

In one form of the invention, the cam follower is directly connected to the roof panel. Alternatively, the cam follower may be mounted at an intermediate point on a lever which is pivotally connected at one end to the roof panel and at the other end to a slider which engages in a horizontally extending track. The result of this is that the upward movement of the cam follower is amplified by the ratio of the distance between the cam follower and the pivot in the horizontal track to the overall length of the lever.

The portion of the track engaged by the front support means is preferably arranged so that, after it has moved out of engagement with the front edge of the opening, the front edge of the panel is kept below the vehicle roof level so as to reduce wind buffeting.

Embodiments of the invention will now be described, by way of example, with reference to the accompanying drawings in which:

Figure 1 is a plan view of one side of an opening roof in accordance with the invention;

Figure 2 is a cross-sectional view taken on the line 2—2 in Figure 1;

Figure 3 is a cross-sectional view, similar to Figure 2 but showing the panel with its rear edge in the fully raised position;

Figure 4 is a cross-sectional view, similar to Figure 2 but showing the panel moved somewhat rearwardly from its fully forward position;

Figure 5 is a cross-sectional view, similar to Figure 2 but showing the panel in its fully open position;

Figure 6 is a cross-sectional view taken on the line 6—6 in Figure 1;

Figure 7 is a cross-sectional view, similar to Figure 2, of a second embodiment of the invention;

Figure 8 is a cross-sectional view, similar to Figure 2, of a third embodiment of the invention; and

Figure 9 is a cross-sectional view, similar to Figure 4, of the roof shown in Figure 8.

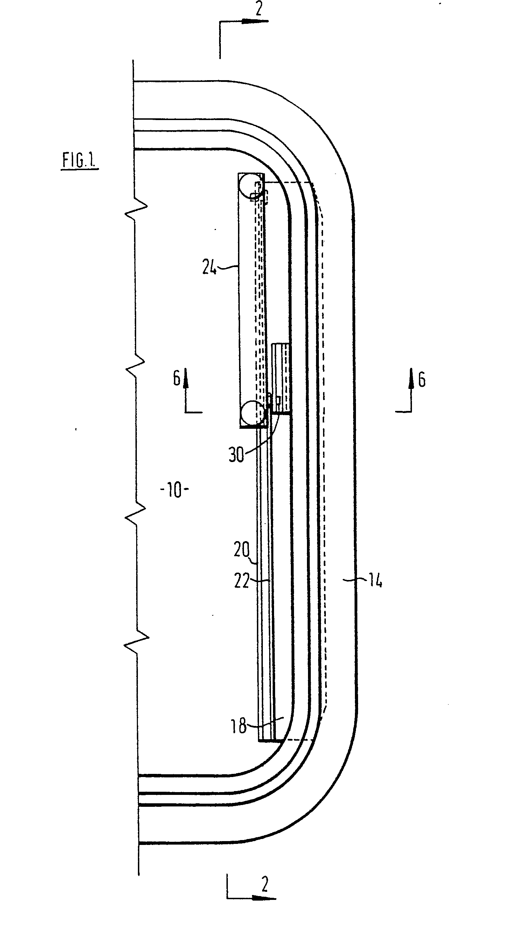

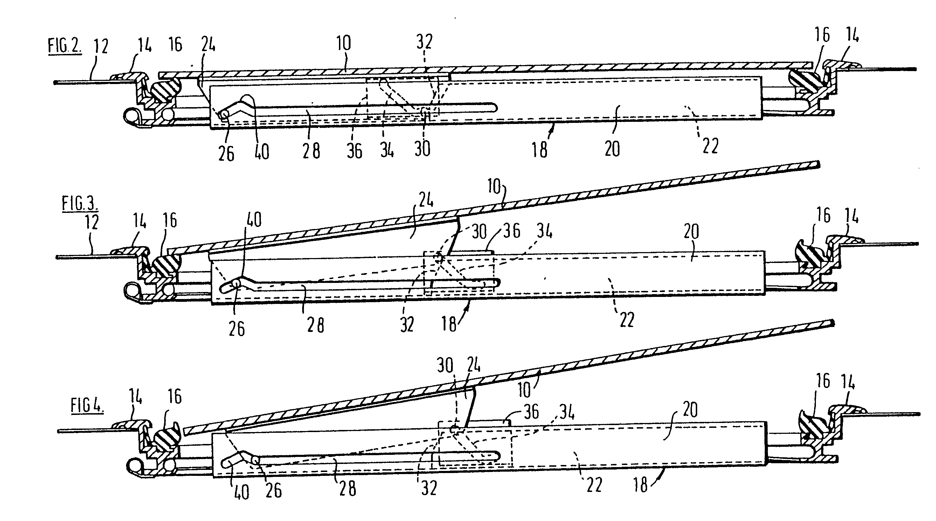

Referring to Figures 1 and 2, an opening roof for a motor vehicle comprises a movable panel 10 which is dimensioned to fill an opening in a fixed vehicle roof 12, the opening being bounded by a frame member 14 which carries a resilient rubber seal 16 having a formation to engage with the underside of the panel 10 when the latter is in its fully closed position, as can best be seen in Figure 2.

On the side of the opening illustrated in the drawings, the frame member 14 carries a track member 18 which extends along substantially the whole of the side of the opening and comprises a horizontal portion with two upstanding limbs 20 and 22. Secured to the panel 10 is an L-shaped member 24 having a vertical limb which projects downwardly between the two limbs 20 and 22 of the track member 18. The member 24 carries a first transverse pin 26 at its front end, the pin 26 being received in a slot 28 in the limb 20 of the track. The member 24 also carries a pin 30 adjacent to its rear end which co-operates with the limb 22 of the track in a manner to be explained hereinafter.

The limb 20 extends along substantially the whole of the track member 18. On the other hand, the limb 22 extends only along the rear part thereof, the front edge of the limb 22 constituting a ramp 32 which is located immediately behind the pin 30 when the latter is in the position illustrated in Figure 2.

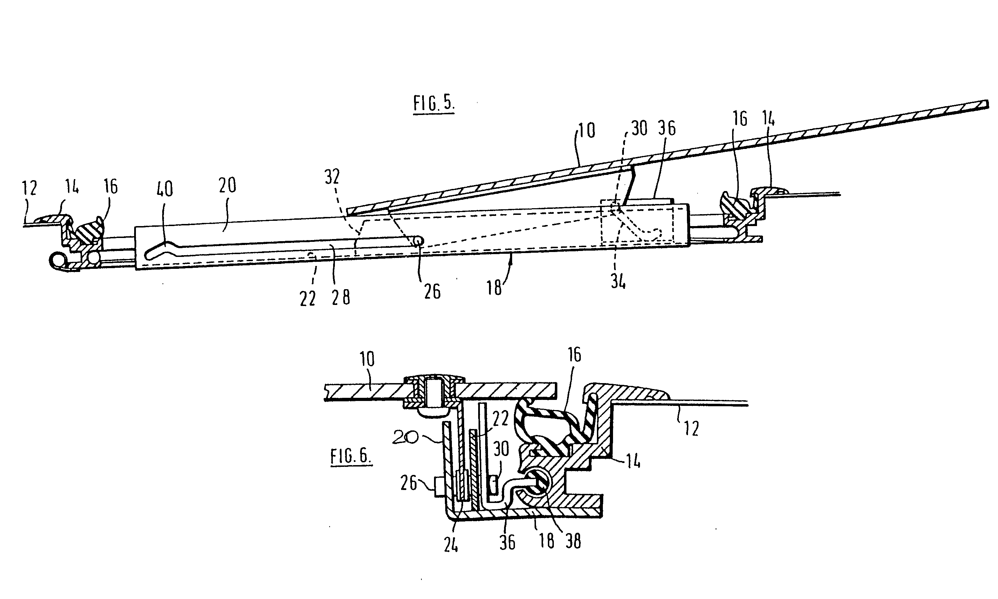

The pin 30 also projects into a slot 34 in a traveller 36 located adjacent to the limb 22. As can be seen from Figure 6, the traveller 36 includes a side limb which engages with a drive cable 38 located in a groove in the frame member 14 and connected to manually or electrically operable drive means for moving the traveller 36 along the track.

As can be seen from Figure 2, the slot 34 in the traveller 36 is inclined in the opposite direction to the ramp 32. Consequently, as shown in Figure 2, the scissors action between the slot 34 and the ramp 32 raises the pin 30 to the top of the ramp 32, pivoting the panel 10 about the front pin 26 to its tilted position as shown in Figure 2. During this movement, the pin 26 moves along an upwardly cranked front section 40 of the track 28 as a result of the rearward component of the movement of the pin 30 as it travels up the ramp 32. This upward movement of the pin 26 prevents there being any downward movement of the front edge of the panel 10 during tilting which would result in undue compression of the seals 16.

As rearward movement of the slider 36 continues, the pin 30 moves along the top of the limb 22 of the track member 18. The pin 26 reaches the highest point of the cranked section 40 of the track 28, at which point the front edge of the panel 10 is lifted over the rear edge of the seal 16. Further rearward movement of the slider 36 causes the pin 26 to move into the main horizontal part of the slot 28, in which position the front edge of the panel 10 is below the level of the top of the seal 16, as shown in Figure 4. The front edge of the panel 10 is, therefore, not in a position to deflect air flowing over the vehicle roof downwardly into the interior of the vehicle. As rearward movement of the slider 36 continues, the panel 10 moves rearwardly while maintaining substantially the same angle to the horizontal, until it reaches the fully open position, illustrated in Figure 5, with the pin 26 at the rear end of the slot 28.

The panel 10 can be moved back to its originally described fully closed position by moving the slider 36 forwardly, the cranked section 40 of the slot 28 lifting the front edge of the panel 10 over the seal 16.

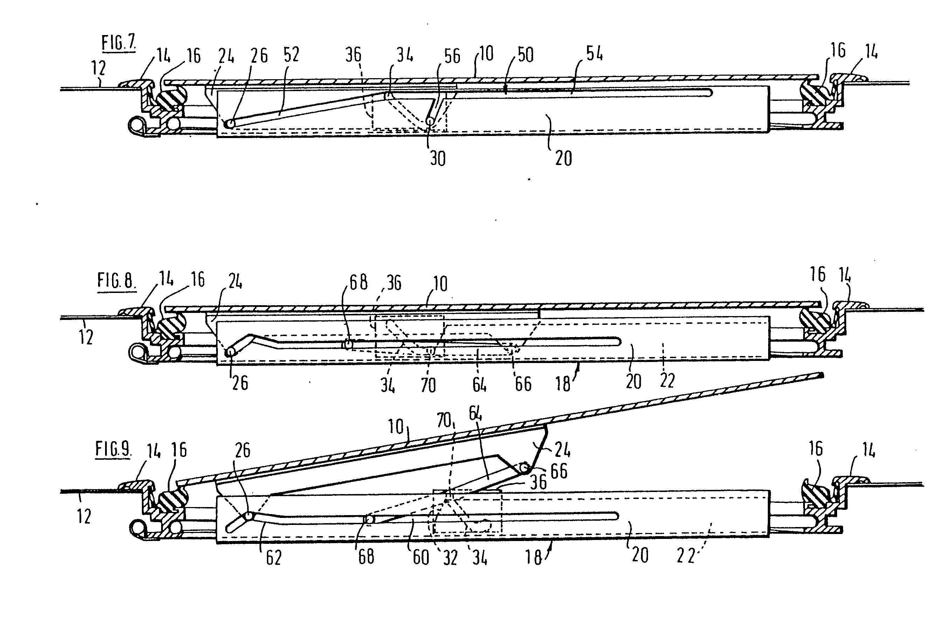

Figure 7 illustrates another embodiment of the invention, many of the components of which are identical with the corresponding components of the embodiments illustrated in Figure 1 to 6 and are denoted by the same reference numerals. In particular, the panel 10 is supported by the pins 26 and 30 secured to the L-shaped member 24. However, in contrast to the embodiment illustrated in Figures 1 to 6, both pins 26 and 30 project into a single slot 50 in the inner limb 20 of the track 18. The slot 50 has a front portion 52, the front end of which is inclined to the horizontal at the same angle as the front part of the cranked portion 40 of the track 28, and which continues to a point level with the top of the ramp 32 of Figures 1 to 6 where it joins a horizontal section 54. Adjacent to the front end of its horizontal section 54, the slot 50 has a branch 56 extending downwardly at the same angle as the ramp 32 of Figures 1 to 6. When the panel 10 is in its closed position, as illustrated in Figure 7, the pin 26 is at the front end of the inclined portion 52 of the slot 50 while the pin 30 is at the bottom of the branch 56. When the slider 36 is moved rearwardly, the pin 30 is lifted up the branch 56 and the panel 10 moves to a position equivalent to that illustrated in Figure 3. However, during further rearward movement of the slider 36, the pin 26 continues to move up the inclined portion of the slot 52 so that the panel 10 is horizontal when in its fully open position (not shown).

Figures 8 and 9 illustrate a further embodiment. Once again, those components which are equivalent to corresponding components of the embodiments already described, will be denoted with the same reference numerals and will not be described again in detail. The inner limb 20 of the track 18 has a slot 60, the front of which has a cranked portion 62 similar to portion 40 of the track 28 shown in Figures 2 to 5 but the main horizontal portion of the slot 60 extends nearer to the back of the track member 18. The pin 26 at the front of the L-shaped member 24 secured to the panel 10 engages in the slot 60 as before but, in place of the pin 30, a lever 64 is pivotally connected, at 66 to the rear end of the L-shaped member 24. The other end of the lever 64 carries a pin 68 which engages in the slot 60 while, at an intermediate point, the lever 64 carries a cam follower 70 which engages with the ramp 32 formed at the front end of the outer side limb 22 of the track member 18.

Operation of the embodiment illustrated in Figure 9 is similar to that of the embodiment illustrated in Figures 1 to 6 except that the lever 64 serves to amplify the upward movement of the panel 10 in relation to the height of the ramp 32.

**Claims**

1. A sliding roof for a vehicle comprising a panel (10) which, in its forward position, closes an opening in the fixed vehicle roof (12), the panel (10) being pivotally mounted at each side adjacent to its front edge on respective front support means (26) which are movable along respective guide tracks (18) extending longitudinally of the vehicle on each side of the opening, respective rear support means (30, 64) being coupled to the panel behind each front support means (26) and respective actuating means (36) being arranged to co-operate with each rear support means (30, 70) to raise the rear edge of the panel (10) and then to move the panel (10) rearwardly so as to partially overlie the fixed roof (12) behind the opening, characterised in that each rear support means comprises a cam follower (30, 70) connected to the panel (10) and each actuating means comprises a member (36) which is movable along the corresponding guide track (18) and has a fixed cam surface (34) aranged to co-operate with a stationary cam surface (32, 56) on the track (18) to move the cam follower (30, 70) substantially vertically so as to raise the rear edge of the panel (10) and then to move the cam follower (30, 70) substantially horizontally so as to move the panel (10) rearwardly.

2. A sliding roof according to claim 1, characterised in that the cam surface (34) on the actuating member slopes forwardly and upwardly while the fixed cam surface has a substantially vertical section (32) and a substantially horizontal section (22).

3. A sliding roof according to claim 1 or 2, characterised in that the cam surface on the actuating member (36) comprises a slot (34) in which the cam follower (30, 70) is a sliding fit.

4. A sliding roof according to claim 1, 2 or 3, characterised in that the cam follower (30) is directly connected to the roof panel (10).

5. A sliding roof according to claim 1, 2 or 3, characterised in that the cam follower (70) is mounted at an intermediate point on a lever (64) which is pivotally connected at one end (66) to the roof panel (10) and at the other end to a slider (68) which engages in a horizontally extending track (60).

6. A sliding roof according to any preceding claim, characterised in that the portion (40, 62) of the track engaged by the front support means (26) is arranged so that, after it has moved out of engagement with the front edge of the opening, the front edge of the panel (10) is below the level of the vehicle roof (12).

**Patentansprüche**

1. Schiebedach für ein Fahrzeug, umfassend ein Paneel (10), das in seiner vorderen Stellung eine Öffnung in dem feststehenden Fahrzeugdach (12) verschließt, wobei das Paneel (10) schwenkbar an jeder Seite neben seiner Vorderkante auf jeweiligen vorderen Lagermitteln (26), die entlang zugehöriger Führungsspuren (18), die sich in Längsrichtung des Fahrzeugs auf jeder Seite der Öffnung erstrecken, montiert ist, zugehörige hintere Lagermittel (30, 64) mit dem Paneel hinter jedem vorderen Lagermittel (26) gekoppelt sind und zugehörige Betätigungsmittel (36) vorgesehen sind, um mit jedem hinteren Lagermittel (30, 70) so zusammenzuwirken, daß die Hinterkante des Paneels (10) angehoben und dann das Paneel (10) rückhwärts bewegt wird, damit es teilweise oberhalb des feststehenden Dachs (12) hinter der Öffnung liegt, dadurch gekennzeichnet, daß jedes hintere Lagermittel einen Steuerkurvenfolger (30, 70), der mit dem Paneel (10) verbunden ist, aufweist und jedes Betätigungsmittel ein Element (36) besitzt, welches entlang der entsprechenden Führungsspur (18) bewegbar ist und eine feststehende Steuerfläche (34) besitzt, die derart angeordnet ist, daß sie mit einer feststehenden Steuerfläche (32, 56) auf der Spur (18) zusammenwirkt, um den Steuerkurvenfolger (30, 70) etwa vertikal zu bewegen und dadurch die Hinterkante des Paneels (10) anzuheben und anschließend den Steuerkurvenfolger (30, 70) etwa horizontal zu bewegen, um das Paneel (10) nach hinten zu bewegen.

2. Schiebedach nach Anspruch 1 dadurch gekennzeichnet, daß die Steuerfläche (34) an dem Betätigungselement nach vorn und nach oben schräg verläuft, während die feststehende Steuerfläche einen etwa vertikalen Abschnitt (32) und einen etwa horizontalen Abschnitt (22) aufweist.

3. Schiebedach nach Anspruch 1 oder 2, dadurch gekennzeichnet, daß die Steuerfläche an dem Betätigungselement (36) einen Schlitz (34) besitzt, in welchem der Steuerkurvenfolger (30, 70) einen Gleitsitz bildet.

4. Schiebedach nach Anspruch 1, 2 oder 3, dadurch gekennzeichnet, daß der Steuerkurvenfolger (30) direkt mit dem Dachpaneel (10) verbunden ist.

5. Schiebedach nach Anspruch 1, 2 oder 3, dadurch gekennzeichnet, daß der Steuerkurvenfolger (70) an einem Zwischenpunkt auf einem Hebel (64) montiert ist, welcher mit einem Ende (66) schwenkbar mit dem Dachpaneel (10) und mit dem anderen Ende mit einem Gleitstück (68), welches in eine sich horizontal erstreckende Spur (60) eingreift, verbunden ist.

6. Schiebedach nach einem der vorausgehenden Ansprüche, dadurch gekennzeichnet, daß der Abschnitt, (40, 62) der Spur, mit dem das vordere Lagermittel (26) in Eingriff kommt, derart angeordnet ist, daß sich die Vorderkante des Paneels (10), nachdem sie sich von der Vorderkante der Öffnung gelöst hat, unterhalb der Höhe des Fahrzeugdachs (12) befindet.

**Revendications**

1. Un toit ouvert coulissant pour un véhicule comprenant un panneau (10) qui, dans sa position avant, ferme une ouverture dans le toit fixe du véhicule (12), le panneau (10) étant monté à pivotement de chaque côté adjacent à son bord avant sur des moyens de support respectifs avant (26) qui peuvent se déplacer le long de rails de guidage respectifs (18) s'étendant le long véhicule de chaque côté de l'ouverture, des moyens de support respectifs arrière (30, 64) étant couplés au panneau derrière chaque moyen de support avant (26) et des moyens d'actionnement respectifs (36) étant destinés à coopérer avec chacun des moyens de support arrière (30, 70) pour soulever le bord arrière du panneau (10) et déplacer alors le panneau (10) vers l'arrière de manière à ce qu'il recouvre en partie le toit fixe (12) derrière l'ouverture, caractérisé en ce que chacun des moyens de support arrière comporte un galet de came (30, 70) relié au panneau (10) et en ce que chacun des moyens d'actionnement comporte un élément (36) qui se déplace le long du rail de guidage correspondant (18) et présente une surface de came fixe (34) destinée à coopérer avec une surface de came immobile (32, 56) sur le rail (18) pour déplacer le galet de came (30, 70) essentiellement verticalement de manière à lever le bord arrière du panneau (10) et à déplacer alors le galet de came (30, 70) essentiellement horizontalement afin de déplacer le panneau (10) vers l'arrière.

2. Un toit coulissant selon la revendication 1, caractérisé en ce que, la surface de came (34) ménagée sur l'élément d'actionnement est inclinée vers l'avant et vers le haut alors que la surface de came immobile présente une partie (32) essentiellement verticale et une partie (22) essentiellement horizontale.

3. Un toit coulissant selon la revendication 1 ou 2, caractérisé en ce que, la surface de came ménagée sur l'élément d'actionnement (36) présente une fente (34) dans laquelle le galet de came (30, 70) est monté à coulissement.

4. Un toit coulissant selon la revendication 1, 2 ou 3, caractérisé en ce que le galet de came (30) est directement relié au panneau de toit (10).

5. Un toit coulissant selon la revendication 1, 2 ou 3, caractérisé en ce que, le galet de came (70) est monté en un point intermédiaire sur un levier (64) qui est relié à pivotement, à une extrémité (66) au panneau de toit (10) et, à l'autre extrémité, à un coulisseau (68) qui s'engage dans un rail s'étendant horizontalement (60).

6. Un toit coulissant selon l'une quelconque des revendications précédentes, caractérisé en ce que la partie (40, 62) du rail en prise avec les moyens de support avant (26), est disposée de telle sorte que, une fois dégagé du bord avant de l'ouverture, le bord avant du panneau (10) est situé au-dessous du niveau du toit du véhicule.

FIG.1.

0 113 551

1

FIG.2

FIG.3

FIG.4

FIG. 5.

FIG. 6.

0 113 551

FIG.7.

FIG.8.

FIG.9.

0 113 551